# FASCICULE DE BREVET EUROPEEN

(11) **EP 1 137 538 B1**
(45) Date de publication et mention de la délivrance du brevet: **26.11.2003**
(21) Numéro de dépôt: 99956278.8
(22) Date de dépôt: 03.12.1999
(51) Int. Cl.: B32B 27/32, B65D 65/40

(54) **FILM COMPOSITE MULTICOUCHES ET UTILISATION DE CE FILM**
MEHRSCHICHTFILM UND SEINE VERWENDUNG
MULTILAYER COMPOSITE FILM AND USE THEREOF

(30) Priorité: 07.12.1998 EP 98420226
(43) Date de publication de la demande: 04.10.2001
(73) Titulaire: WALK PAK HOLDING NV, Curaçao (AN)
(72) Inventeur: SUSINI, Etienne, F-94400 Villecresnes (FR)
(74) Mandataire: Savoye, Jean-Paul
(86) Numéro de dépôt international: IB9901930
(87) Numéro de publication internationale: WO00034039

(56) Documents cités:
- EP-A- 0 247 896
- WO-A-91/10565
- US-A- 5 085 927
- US-A- 5 093 188
- DATABASE WPI Section Ch, Week 9742 Derwent Publications Ltd., London, GB; Class A17, AN 97-452948 XP002105425 & JP 09 207294 A (TONEN KAGAKU KK), 12 août 1997 (1997-08-12)
- DATABASE WPI Section Ch, Week 9808 Derwent Publications Ltd., London, GB; Class A17, AN 98-081490 XP002105426 & JP 09 314769 A (SEKISUI CHEM IND CO LTD) , 9 décembre 1997 (1997-12-09)
- DATABASE WPI Section Ch, Week 9851 Derwent Publications Ltd., London, GB; Class A17, AN 98-602642 XP002105427 & JP 10 272747 A (KOHJIN CO LTD), 13 octobre 1998 (1998-10-13)
- DATABASE WPI Section Ch, Week 9229 Derwent Publications Ltd., London, GB; Class A92, AN 92-239419 XP002105428 & JP 04 163041 A (IDEMITSU PETROCHEM CO), 8 juin 1992 (1992-06-08)

## Description

La présente invention se rapporte à un film composite multicouche, de qualité alimentaire, dont l'épaisseur est comprise entre 30 µm et 120 µm, comprenant une couche à base de PP prise en sandwich entre deux couches externes de LLDPE dont la densité d est 0, 919 < d < 0, 930 g/cm³, ainsi qu'à une utilisation de ce film.

Les films composites multicouches sont bien connus et sont généralement destinés à combiner les propriétés physiques ou chimiques de différents matériaux polymères en fonction des propriétés recherchées.

On connaît du EP 0 247 896 un film soudable comportant une couche de base qui comprend une polyoléfine, qui présente sur au moins une de ses faces 1 à 20% en poids basé sur la couche de base d'un film comprenant un mélange de 70 à 95% en poids d'un LLDPE et 5 à 30% en poids d'une résine d'un poids moléculaire inférieur à celui du LLDPE.

Un autre film soudable multicouche à base de polypropylène comprenant au moins une couche externe de LLDPE dont la densité est de 0,893-0,905 g/cm³, le melt index de 0,1-10 g/10 minutes et contenant jusqu'à 20% d'un comonomère, dans le JP 09 207294.

Dans le JP 09 314769, on a décrit un film soudable comprenant un film de résine flexible de type polypropylène sur les faces opposées duquel des films de LLDPE sont laminés.

Le JP 10 272747 se rapporte à un film étirable à trois couches ou plus comprenant en surface une couche de LLDPE et une couche de copolymère amorphe et comme couche médiane un mélange de polypropylène (C), de polybutène-1 (D) dans un rapport (C)/(D)= 0,10-9,0. Un surfactant de type nonionique est combiné avec une ou plusieurs des couches.

Le US 5 085 927 propose d'augmenter la propriété moulante d'un film étirable par l'addition d'un composé élastomère en plus des agents d'adhésion qui augmentent eux-mêmes les propriétés moulantes du film.

On a proposé par ailleurs, notamment dans le WO 98/28199 un sachet de conditionnement de liquide comprenant une valve de contrôle de la distribution du liquide, constituée par la superposition de deux films soudés selon deux lignes non convergentes pour former un conduit de distribution par écartement des deux films. Ce conduit présente de préférence un passage d'entrée dont le périmètre correspond à celui d'une paille dont l'extrémité est renflée. Ce film présente une élasticité suffisante pour permettre de se dilater lors de l'introduction de cette paille et de se resserrer ensuite autour d'elle pour empêcher son retrait dudit conduit. La paille est ainsi solidaire du sachet et ne peut être retirée que de la valeur nécessaire pour permettre la fermeture du conduit formant la valve.

Le matériau du film formant la valve doit donc présenter une élasticité suffisante pour se serrer autour de la paille tout en permettant le passage de la partie renflée. Ce film doit être compatible avec des boissons et donc répondre aux normes relatives aux produits alimentaires. De préférence, ce matériau doit conserver ses propriétés même après avoir été soumis à une température comprise entre 80° et 90°C, qui est fréquemment celle de la boisson au moment de son conditionnement dans le sachet.

La réunion de toutes ces propriétés dont certaines sont contradictoires n'est pas facile à obtenir même avec la combinaison de plusieurs couches de différents polymères. En particulier, aucun des documents susmentionnés de l'état de la technique permet la réunion de ces propriétés.

Le but de la présente invention est l'obtention d'un film susceptible de satisfaire au moins les exigences principales c'est-à-dire, en plus des propriétés de souplesse nécessaire pour permettre la fermeture étanche du conduit formant la valve, les propriétés élastiques et la compatibilité avec les normes alimentaires. De préférence, le film selon l'invention devrait résister à la température du liquide à conditionner qui peut s'élever à 80°, voire 90°, en gardant intactes ses propriétés de souplesse et d'élasticité.

A cet effet, la présente invention a tout d'abord pour objet un film composite multicouche du type susmentionné, tel que défini par la revendication 1. Elle a également pour objet une utilisation de ce film telle que définie par la revendication 7. Différentes exécutions préférées du film composite correspondent aux définitions données dans les revendications dépendantes de la revendication 1.

Les tests effectués avec le film multicouches objet de la présente invention ont montré qu'un tel film permet de répondre à l'ensemble des exigences susmentionnées, aussi bien en ce qui concerne la valve que la capacité de retenue de la paille dans le conduit de la valve et évidemment l'introduction de cette paille dans ce conduit. Ce film permet en outre de conserver l'ensemble de ces propriétés après un conditionnement du liquide effectué à une température d'au moins 80°C et qui peut atteindre 90°C.

L'invention sera mieux comprise à la lecture des exemples qui vont suivre.

Selon une forme d'exécution, les deux couches externes du film multicouche objet de la présente invention sont formées d'un LLDPE (Linear Low Density Polyéthylène), de préférence le Dow Elite® 5110, dont la densité d est de 0,925 g/cm³ et le melt index MI de 0,85 g/10 minutes selon la norme ASTM D 1238, mesure effectuée à 230°C, en appliquant une masse de 2,16 kg, avec une buse standard de 2,095 mm de diamètre alors que le point de ramollissement Vicat T°ᵥ est de 113°C. De préférence, on ajoute un agent de glissement, dans cet exemple, 900 ppm d'Erucamide® qui est le cis-docosèn-13 amide, un dérivé de l'acide erucique dans au moins une des deux couches externes du film, c'est-à-dire celle qui se trouvera à l'intérieur du canal formant la valve et qui sera donc en contact avec la paille de prélèvement du liquide en vue de faciliter son glissement à l'intérieur du conduit formant la valve réalisée à l'aide du film objet de la présente invention.

La couche médiane de ce film prise en sandwich entre les couches externes susmentionnées est, préférablement constituée d'un mélange de 60% de PP, le Moplen® EP-Q 30RF de Himont, un copolymère hétérophasique dont la densité d est de 0,9 g/cm³, le melt index MI de 0,8 g/10 minutes selon ASTM D 1238/L et le point de ramollissement Vicat T°ᵥ de 150°C. Cette couche médiane comporte encore 20% du LLDPE utilisé pour former les deux couches externes susmentionnées et 20% d'une polyoléfine thermoplastique, l'Adflex® Q100F fabriquée par Himont, dont la densité d est de 0,89 g/cm³ et le melt index MI est de 0,6 g/10 minutes selon ASTM D 1238.

Le rôle de cette polyoléfine thermoplastique est de conférer une élasticité suffisante au polypropylène, pour permettre au film formant la valve et en particulier le conduit d'entrée débouchant dans la valve proprement dite, de se déformer élastiquement au passage d'une partie de retenue renflée de la paille de prélèvement du liquide lors de son introduction dans cette valve. En effet, la longueur du périmètre de ce conduit d'entrée est choisie pour correspondre à celle du périmètre de cette paille, de sorte qu'après avoir introduit la partie de retenue renflée de cette paille, le conduit se resserre autour de la paille et s'oppose à sa sortie.

Cette couche médiane du film objet de cette invention a également pour rôle de conférer à ce film une résistance à une température de 80° à 90°C, de manière à permettre le remplissage des enceintes ou sachets, dont la valve formée du film objet de la présente invention est solidaire, par des boissons conditionnées à de telles températures. Ce remplissage à chaud est effectué pour toutes sortes de boissons, notamment le lait ou les boissons à base de lait ainsi que les jus de fruits. Il doit conserver ses propriétés, en particulier ses propriétés élastiques après le conditionnement à chaud de la boisson.

Le film ainsi fabriqué doit aussi pouvoir être soudé sans que le soudage ne provoque sa dégradation, c'est-à-dire que celui-ci doit conserver sa compatibilité alimentaire avec les boissons qui sont conditionnées.

Les différents essais réalisés pour la mise au point de ce film multicouche ont permis de constater que si l'on peut varier l'épaisseur du film dans une plage assez étendue en fonction des besoins, de 30 µm à environ 120 µm. L' épaisseur du film est de préférence aussi mince que possible afin de permettre une cadence de fabrication élevée. Toutefois, le film étant composé de trois couches, il faut que les épaisseurs des couches respectives restent suffisantes pour pouvoir être co-extrudées. De plus, comme de préférence la couche médiane est plus épaisse que chacune des couches externes, il n'est pas possible en pratique de descendre au-dessous de 30 µm. Dans l'exemple réalisé, le film avait une épaisseur de 40 µm, avec une couche médiane de 20 µm et deux couches externes de 10 µm.

Pour permettre une bonne fermeture de la valve formée à partir du film objet de cette invention, celui-ci doit avoir une bonne souplesse. Dans le cas du LLDPE formant les couches externes et entrant dans la composition de la couche médiane, la souplesse est une fonction de la densité d. C'est la raison du choix du LLDPE dont la densité d est 0,919 < d < 0,930 g/cm³. Pour le PP, la souplesse est fonction de la densité et du melt index MI. La densité d est 0,895 < d < 0,905 g/cm³, tandis que le melt index est compris entre 0,75 et 0,85.

La température Vicat (qui est la température de ramolissement du matériau) des différentes couches ne doit pas être trop éloignées pour permettre leur co-extrusion. Dans l'exemple susmentionné, le point Vicat T°ᵥ du LLDPE doit être > 100°C, tandis que celui du PP doit être < 160°C. De préférence, ces points sont compris entre 110° et 150°C.

La proportion d'agent de glissement, dans cet exemple l'Erucamide® doit être inférieure à 1300 ppm. Bien que cet agent de glissement ne soit nécessaire que pour la couche du film multicouche adjacente à la face de cette feuille destinée à être située à l'intérieur du conduit de la valve, il est préférable de l'incorporer aux deux couches externes étant donné qu'il est ensuite très difficile de faire la différence entre ces deux couches externes et qu'il y aurait donc un risque de tourner le film du mauvais côté. En ayant les deux côtés identiques, ce probleme n'existe plus.

De préférence, le film selon l'invention, au moins dans son utilisation spécifique pour la confection de la valve susmentionnée, n'est soumis à aucun traitement d'oxydation corona.

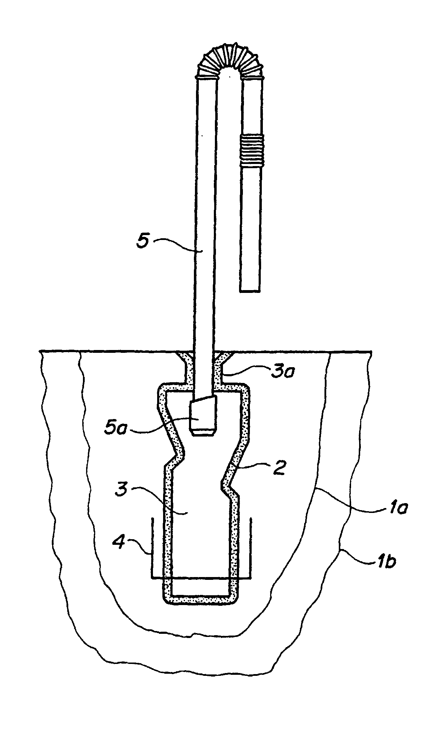

La figure unique du dessin annexé représente, schématiquement et à titre d'exemple, une vue en plan d'une valve réalisée à l'aide d'un film multicouche objet de la présente invention.

Cette valve est destinée à se trouver à l'intérieur d'un récipient, notamment un sachet étanche, non représenté destiné au conditionnement d'un liquide, notamment d'une boisson. On voit sur cette figure deux épaisseurs 1a, 1b de ce film superposées. Ces deux épaisseurs de film 1a, 1b sont réunies par une ligne de soudage 2, ménageant entre elles un conduit 3 formant la valve de distribution. Une découpe 4 permet de faire communiquer le conduit 3 avec l'extérieur, c'est-à-dire avec le contenu du récipient. Ce conduit 3 est normalement fermé, les deux épaisseurs de film 1a, 1b étant jointives. C'est en introduisant un élément pour les écarter que la valve s'ouvre et que le liquide peut alors circuler entre l'intérieur du récipient et l'extérieur à travers le conduit 3. L'élément servant à ouvrir le conduit 3 est lui-même formé par un conduit, notamment par une paille 5.

L'extrémité de cette paille présente un renflement 5a tel que décrit dans le EP 0 931 489-A, publié après la date de priorité de la présente demande de brevet. La portion d'entrée 3a du conduit 3 de la valve est rétrécie et présente un périmètre correspondant à celui de la paille 5, de sorte que cette portion d'entrée 3a s'ajuste autour de cette paille 5 et s'oppose au passage de la partie renflée 5a. Pour permettre l'introduction de la paille 5 à travers cette portion d'entrée 3a rétrécie, l'extrémité avant de la partie renflée 5a de la paille 5 présente une section croissant progressivement, alors que l'arrière de cette partie renflée est reliée par une portée à la partie cylindrique de la paille 5, ce qui l'empêche de ressortir à travers la portion d'entrée 3a du conduit 3.

Pour obtenir cet ajustement de la portion d'entrée 3a du conduit 3 autour de la paille, en permettant cependant le passage de la partie renflée 5a, le film multicouche 1a, 1b formant cette valve doit présenter une élasticité suffisante pour se resserrer autour de la paille 5 après le passage de cette partie renflée 5a. C'est notamment l'un des rôles du film multicouche objet de l'invention.

## Revendications

1. Film composite multicouches, de qualité alimentaire, dont l'épaisseur est comprise entre 30 µm et 120 µm, comprenant une couche médiane à base de PP prise en sandwich entre deux couches externes de LLDPE dont la densité d est 0,919 < d < 0,930 g/cm³, **caractérisé en ce que** la couche médiane comprend 50-70% en poids de PP dont la densité d est 0,895 < d < 0,905 g/cm³ et dont le melt index est compris entre 0, 75 et 0,85 g/10 minutes, 10-30% en poids dudit LLDPE et 10-30% en poids d'une polyoléfine thermoplastique dont la densité d est 0,885 < d < 0,905 g/cm³ et dont le melt index est compris entre 0,55 et 0,65 g/10 minutes.

2. Film composite selon la revendication 1, **caractérisé en ce** la température Vicat T°ᵥ du LLDPE est > 100°C, tandis que celle du PP est < 160°C.

3. Film composite selon l'une des revendications précédentes, **caractérisé en ce que** son épaisseur est < 60 µm.

4. Film composite selon l'une des revendications précédentes, **caractérisé en ce que** l'épaisseur de la couche médiane est sensiblement le double de celle de chacune des deux couches externes.

5. Film composite selon l'une des revendications précédentes, **caractérisé en ce qu'**il n'est soumis à aucun traitement d'oxydation corona.

6. Film composite selon l'une des revendications précédentes, **caractérisé en ce que** au moins une des couches externes dudit film contient jusqu'à 1300 ppm d'un agent de glissement.

7. Film composite selon la revendication 6, **caractérisé en ce que** ledit agent de glissement est de l'Erucamide®.

8. Utilisation du film composite selon l'une des revendications précédentes pour former une valve de contrôle de la distribution d'une boisson, constituée par la superposition de deux couches (1a, 1b) dudit film soudées s elon deux lignes non convergentes (2) pour former un conduit de distribution (3) par écartement desdites couches (1a, 1b), le périmètre de la section d'entrée (3a) de ce conduit de distribution (3) correspondant à celui d'un conduit de prélèvement (5) destiné à l'écartement desdites couches (1a, 1b), afin de s'ajuster autour de ce conduit de prélèvement (5), ce film présentant une élasticité suffisante pour permettre l'introduction d'un renflement (5a) de section progressivement croissante, dudit conduit de prélèvement (5) suivi d'une portée reliant ce renflement (5a) audit conduit de prélèvement (5a), empêchant son retrait dudit conduit (3).

9. Utilisation selon la revendication 8, **caractérisé en ce que** ladite couche externe dudit film à laquelle à été ajouté un agent de glissement est la couche adjacente audit conduit (3).

## Patentansprüche

1. Mehrschicht-Verbundfolie von Nahrungsmittelqualität, deren Dicke zwischen 30 µm und 120 µm liegt und die eine Mittelschicht auf PP-Basis umfasst, die zwischen zwei Aussenschichten aus LLDPE eingefügt ist, deren Dichte d 0,919 < d < 0,930 g/cm³ beträgt, **dadurch gekennzeichnet, dass** diese Mittelschicht 50 bis 70 Gewichtsprozent an PP, dessen Dichte d 0,895 < d < 0,905 g/cm³ beträgt und dessen Schmelzindex zwischen 0,75 und 0,85 g/10 min liegt, 10 bis 30 Gewichtsprozent dieses LLDPE sowie 10 bis 30 Gewichtsprozent eines thermoplastischen Polyolefins enthält, dessen Dichte d 0,885 < d < 0,905 g/cm³ beträgt und dessen Schmelzindex zwischen 0,55 und 0,65 g/10 min liegt.

2. Verbundfolie nach Anspruch 1, **dadurch gekennzeichnet, dass** die Vicat-Temperatur Tᵥ des LLDPE mehr als 100 °C beträgt, während die des PP weniger als 160 °C beträgt.

3. Verbundfolie nach einem der vorangehenden Ansprüche, **dadurch gekennzeichnet, dass** ihre Dicke weniger als 60 µm beträgt.

4. Verbundfolie nach einem der vorangehenden Ansprüche, **dadurch gekennzeichnet, dass** die Dicke der Mittelschicht im Wesentlichen das Doppelte der Dicke jeder der beiden Aussenschichten beträgt.

5. Verbundfolie nach einem der vorangehenden Ansprüche, **dadurch gekennzeichnet, dass** sie keiner oxidierenden Korona-Behandlung unterworfen wird.

6. Verbundfolie nach einem der vorangehenden Ansprüche, **dadurch gekennzeichnet, dass** zumindest eine der Aussenschichten dieser Folie bis zu 1300 ppm eines Gleitmittels enthält.

7. Verbundfolie nach Anspruch 6, **dadurch gekennzeichnet, dass** dieses Gleitmittel Erucamide® ist.

8. Verwendung der Verbundfolie nach einem der vorangehenden Ansprüche, um ein Kontrollventil für die Verteilung eines Getränks zu bilden, das durch die Überlagerung von zwei Schichten (1a, 1b) dieser Folie aufgebaut wird, die entlang zweier nicht konvergenter Linien (2) verschweisst sind, um durch Auseinanderspreizen dieser Schichten (1a, 1b) einen Verteilkanal (3) zu bilden, wobei die Peripherie des Eintrittsquerschnitts (3a) dieses Verteilkanals (3) dem eines Entnahmerohres (5) entspricht, das für das Auseinanderspreizen dieser Schichten (1a, 1b) bestimmt ist, um sich um dieses Entnahmerohr (5) herum anzupassen, wobei diese Folie eine genügend grosse Elastizität aufweist, um die Einführung einer Verdickung (5a) progressiv ansteigenden Querschnitts zu erlauben, und auf dieses Entnahmerohr (5) eine Auflagefläche folgt, die diese Verdickung (5a) mit diesem Entnahmerohr (5a) verbindet und sein Herausziehen aus diesem Kanal (3) verhindert.

9. Verwendung nach Anspruch 8, **dadurch gekennzeichnet, dass** diese Aussenschicht dieser Folie, der ein Gleitmittel hinzugefügt worden ist, die diesem Kanal (3) benachbarte Schicht ist.

## Claims

1. Multilayer composite film of food grade quality, the thickness of which is between 30 µm and 120 µm, comprising a middle layer based on PP sandwiched between two outside layers of LLDPE, the density d of which is between 0.919 < d < 0.930 g/cm³, **characterized in that** the middle layer contains 50-70% by weight of PP the density d of which is 0.895 < d < 0.905 g/cm³ and the melt index of which is between 0.75 and 0.85 g/10 minutes, 10-30% by weight of said LLDPE and 10-30% by weight of a thermoplastic polyolefin the density d of which is 0.885 < d < 0.905 g/cm³ and the melt index of which is between 0.55 and 0.65 g/10 minutes.

2. Composite film according to Claim 1, **characterized in that** the Vicat temperature T°ᵥ of the LLDPE is greater than 100°C, while that of the PP is less than 160°C.

3. Composite film according to one of the preceding claims, **characterized in that** its thickness is less than 60 µm.

4. Composite film according to one of the preceding claims, **characterized in that** the thickness of the middle layer is practically twice that of each of the two outside layers.

5. Composite film according to one of the preceding claims, **characterized in that** it is not subjected to any corona oxidation treatment.

6. Composite film according to one of the preceding claims, **characterized in that** at least one of the outside layers of said film contains up to 1300 ppm of a slip agent.

7. Composite film according to Claim 6, **characterized in that** said slip agent is Erucamide®.

8. Use of the composite film according to one of the preceding claims to form a valve for controlling the dispensing of a drink, consisting of the superposition of two layers (1a, 1b) of said film welded along two non-converging lines (2) to form a distribution passage (3) by parting said layers (1a, 1b), the perimeter of the entry section (3a) of this distribution passage (3) corresponding to that of a withdrawing pipe (5) intended to part said layers (1a, 1b) so as to fit around this withdrawing pipe (5), this film having enough elasticity to allow a bulge (5a) of gradually increasing cross section, belonging to said withdrawing pipe (5) and followed by a bearing surface connecting this bulge (5a) to said withdrawing pipe (5a [sic]) to be introduced, preventing it from being withdrawn from said passage (3).

9. Use according to Claim 8, **characterized in that** said outside layer of said film, to which a slip agent is added, is the layer adjacent to said passage (3).
